(19) Europäisches Patentamt
European Patent Office
Office européen des brevets

(11) **EP 2 586 085 B1**

(12) **EUROPÄISCHE PATENTSCHRIFT**

(45) Veröffentlichungstag und Bekanntmachung des Hinweises auf die Patenterteilung:
**13.11.2024 Patentblatt 2024/46**

(21) Anmeldenummer: **11797720.7**

(22) Anmeldetag: **24.06.2011**

(51) Internationale Patentklassifikation (IPC):
*H01M 4/48* (2010.01)   *H01M 4/50* (2010.01)
*C01G 53/00* (2006.01)   *H01B 1/08* (2006.01)
*H01M 4/505* (2010.01)   *H01M 4/525* (2010.01)

(52) Gemeinsame Patentklassifikation (CPC):
**H01B 1/08; C01G 53/50; H01M 4/505; H01M 4/525;**
C01P 2002/50; C01P 2004/51; C01P 2006/10;
C01P 2006/11; C01P 2006/40; Y02E 60/10

(86) Internationale Anmeldenummer:
**PCT/IB2011/052784**

(87) Internationale Veröffentlichungsnummer:
**WO 2011/161652 (29.12.2011 Gazette 2011/52)**

(54) **VERFAHREN ZUR HERSTELLUNG VON LITHIUM-MISCHMETALLOXIDEN UND IHRE VERWENDUNG ALS KATHODENMATERIAL**

METHOD FOR PRODUCING LITHIUM-MIXED METAL OXIDES AND USE THEREOF AS CATHODE MATERIAL

PROCÉDÉ DE FABRICATION D'OXYDES DE MÉTAL MIXTE-LITHIUM ET LEUR UTILISATION COMME MATÉRIAU DE CATHODE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **25.06.2010 US 358440 P**

(43) Veröffentlichungstag der Anmeldung:
**01.05.2013 Patentblatt 2013/18**

(73) Patentinhaber: **BASF SE**
**67056 Ludwigshafen am Rhein (DE)**

(72) Erfinder:
• **SCHRÖDLE, Simon**
**67059 Ludwigshafen (DE)**
• **HIBST, Hartmut**
**69198 Schriesheim (DE)**
• **LAMPERT, Jordan Keith**
**67063 Ludwigshafen (DE)**
• **SCHWETER, Mark**
**Medina, OH44256 (US)**
• **PETROVIC, Ivan**
**Princeton**
**NJ 08540 (US)**

(74) Vertreter: **BASF IP Association**
**BASF SE**
**G-FLP-C006**
**67056 Ludwigshafen (DE)**

(56) Entgegenhaltungen:
EP-A1- 1 742 281       CN-A- 1 186 351
JP-A- 2000 173 599     JP-A- 2003 095 659
JP-A- 2005 196 992     JP-A- 2006 127 923
JP-A- 2007 317 585     US-A1- 2007 202 405
US-A1- 2010 112 447

**Beschreibung**

Die vorliegende Erfindung betrifft ein Verfahren zur Herstellung von Lithium-Mischmetalloxiden, die als Metallatome im Wesentlichen Lithium, Mangan, Cobalt und Nickel enthalten und ein stöchiometrisches Verhältnis von Lithium zur Gesamtheit der Übergangsmetalle größer 1 aufweisen, ein Verfahren zur Steuerung der zweistufigen Herstellung dieser Lithium-Mischmetalloxide und die Verwendung der somit hergestellten Verbindungen als Kathodenmaterial in einer Lithiumionen-Batterie.

In einer zunehmend mobilen Gesellschaft spielen tragbare elektrische Geräte eine immer grö-ßere Rolle. Seit vielen Jahren finden wiederaufladbare Batterien, insbesondere Lithiumionenbatterien, Einsatz in nahezu allen Lebensbereichen. Die Anode einer modernen Hochenergie-Lithiumionenbatterie besteht heute typischerweise aus Graphit, aber sie kann auch auf metallischem Lithium, einer Lithiumlegierung oder einer Lithiumverbindung basieren. Für den Aufbau der Kathode einer modernen Lithiumionenbatterie wurden in den letzten Jahren verschiedene Lithium-Übergangsmetall-Oxide, insbesondere Lithium-Nickel-Oxide, Lithium-Cobalt-Oxide, Lithium-Mangan-Oxide sowie Lithium-Nickel-Mangan-Cobalt-Oxide (im Nachfolgenden als "Li-NMC-Oxide" bezeichnet), eingesetzt.

Bekannt sind "Li-NMC-Oxide", die ein stöchiometrisches Verhältnis von Lithium zur Gesamtheit der Übergangsmetalle größer 1 aufweisen und im Nachfolgenden als "überstöchiometrische Li-NMC-Oxide" bezeichnet werden. Daneben sind jedoch auch Li-NMC-Oxide bekannt, die ein stöchiometrisches Verhältnis von Lithium zur Gesamtheit der Übergangsmetalle kleiner oder gleich 1 aufweisen und im Nachfolgenden als "unterstöchiometrische Li-NMC-Oxide" bezeichnet werden. Es sind bereits Verfahren zur Herstellung von Li-NMC-Oxiden im Stand der Technik bekannt.

US 2007/0202405 A1 beschreibt ein im Wesentlichen aus einem Kalzinierungsschritt bestehendes Verfahren zur Herstellung von überstöchiometrischen Li-NMC-Oxiden der Formel $Li_{1+z}Ni_xMn_yCo_{1-x-y}O_\delta$ (wobei $0<z\leq0,91$, $0,1\leq x\leq0,55$, $0,2\leq y\leq0,9$, $0,5\leq x+y\leq1$, $1,9\leq\delta\leq3$). Wie in den Ausführungsbeispielen gezeigt wird, erfolgt die Kalzinierung bei einer Dauer von 10 bis 12 Stunden und bei einer Temperatur von 950°C bis 990°C.

JP-A-2000-173599 beschreibt ein aus zwei Schritten bestehendes Verfahren zur Herstellung von lithiumhaltigen Mischmetalloxiden der Formel $LiNi_{(1-x)}Co_yM_zO_2$ (wobei $0,1\leq x\leq0,3$, $0\leq y\leq0,3$, $0\leq z\leq0,3$, und $x=y+z$, und M ist ein Element oder mehrere Elemente aus Al, Mn, Mg, Fe, V, Ca, Ti, und Cr). Sofern diese Mischmetalloxide Mn als M enthalten, sind sie unterstöchiometerische Li-NMC-Oxiden. Bei diesem Verfahren wird im ersten Schritt eine Mischung aus $Ni_{(1-x)}Co_yM_z$-Hydroxid und Lithiumhydroxid in kontinuierlicher Fahrweise einer Dehydratisierung unterzogen, wobei die Temperatur der Schmelzpunkt von Lithiumhydroxid oder eine niedrigere Temperatur sein kann. Im zweiten Schritt erfolgt die Kalzinierung in einem stationären Zustand.

JP-A-2003 095659 beschreibt ein Verfahren zur Herstellung von lithiumhaltigen Mischmetalloxiden.

Aufgabe der vorliegenden Erfindung war es, ein effizientes Verfahren zur Herstellung von überstöchiometrischen Li-NMC-Oxiden bereitzustellen, welches bei kurzen Prozesszeiten und niedrigen Temperaturen durchgeführt werden kann. Zum einen sollten mittels des Verfahrens Li-NMC-Oxide zur Verfügung gestellt werden, die als Kathodenmaterial über ein hohes Maß an Sicherheit bei der Benutzung verfügen. Zum anderen sollten diese Li-NMC-Oxide als Kathodenmaterial eine hohe spezifische Kapazität aufweisen.

Die oben bezeichnete Aufgabe der vorliegenden Erfindung wird gelöst durch das erfindungsgemäße Verfahren zur Herstellung von Lithium-Mischmetalloxiden, die als Metallatome im Wesentlichen Lithium, Mangan, Cobalt und Nickel enthalten und ein stöchiometrisches Verhältnis von Lithium zur Gesamtheit der Übergangsmetalle größer 1 aufweisen, umfassend

a) die Herstellung eines als Zwischenprodukt (B) bezeichneten Gemisches, welches im Wesentlichen lithiumhaltige Mischmetallhydroxide und lithiumhaltige Mischmetalloxidhydroxide enthält,

worin Mangan, Cobalt (Variable a) und Nickel (Variable b) im Verhältnis (1-a-b):a:b enthalten sind und worin die über alle Ionen von Mangan, Cobalt und Nickel gemittelte Oxidationszahl mindestens 4-1,75a-1,75b beträgt, wobei $0 \leq a \leq 0,5$ und $0,1 \leq b \leq 0,8$ gilt, durch eine, unter fortwährender Durchmischung und in Gegenwart von Sauerstoff erfolgende, thermische Behandlung eines Gemisches (A), enthaltend mindestens eine Übergangsmetallverbindung und mindestens ein Lithiumsalz (L),
wobei während der thermischen Behandlung Lithiumsalz (L) nicht schmilzt, und

b) die ohne Durchmischung und in Gegenwart von Sauerstoff erfolgende thermische Behandlung des Zwischenproduktes (B).

Die oben bezeichneten Aufgaben der vorliegenden Erfindung werden gelöst durch das erfindungsgemäße Verfahren zur Steuerung einer zweistufigen Herstellung von Lithium-Mischmetalloxiden, die als Metallatome im Wesentlichen Lithium, Mangan, Cobalt und Nickel enthalten und ein stöchiometrisches Verhältnis von Lithium zur Gesamtheit der Übergangsmetalle größer 1 aufweisen, wobei der Steuerungsparameter (P) die über alle Ionen von Mangan, Cobalt und Nickel gemittelte Oxidationszahl des Gemisches ist, welches im Wesentlichen lithiumhaltige Mischmetallhydroxide und lithiumhaltige Mischmetalloxidhydroxide enthält und dabei die Metallionen Mangan, Cobalt und Nickel im Verhältnis (1-a-b):a:b enthält und aus einer thermischen Behandlung in Gegenwart von Sauerstoff unter fortwährender Durchmischung erhältlich ist, und die Überschreitung des (P)-Schwellenwertes von 4-1,75a-1,75b den Zeitpunkt bestimmt, an dem der Wechsel zu einer thermischen Behandlung in Gegenwart von Sauerstoff ohne Durchmischung erfolgt.

Ferner wurde die erfindungsgemäße Verwendung der im oben genannten Herstellverfahren erhältlichen überstöchiometrischen Li-NMC-Oxide als Kathodenmaterial für eine Lithiumionenbatterie gefunden.

Bevorzugte Ausführungsformen werden in den Unteransprüchen und in der Beschreibung dargelegt. Kombinationen bevorzugter Ausführungsformen liegen ebenfalls im Rahmen der vorliegenden Erfindung.

Das oben genannte, erfindungsgemäße Herstellverfahren umfasst im Wesentlichen zwei Stufen. Diese zwei Stufen können zeitlich und örtlich getrennt ablaufen, jede Stufe kann mehrere einzelne Teilschritte enthalten.

Das oben genannte, erfindungsgemäße Herstellverfahren umfasst die Herstellung des Zwischenproduktes (B) durch die thermische Behandlung des Gemisches (A).

Erfindungsgemäß enthält das Gemisch (A) mindestens eine Übergangsmetallverbindung und mindestens ein Lithiumsalz (L). Im Hinblick auf die erstgenannte Komponente enthält das Gemisch (A) bevorzugt ein bis vier Übergangsmetallverbindungen, besonders bevorzugt eine Übergangsmetallverbindung. Im Hinblick auf die letztgenannte Komponente enthält das Gemisch (A) bevorzugt ein bis vier Lithiumsalze (L), besonders bevorzugt ein Lithiumsalz (L).

Die mindestens eine Übergangsmetallverbindung enthält mindestens eines der Metalle Mangan, Cobalt und Nickel. Bevorzugt enthält mindestens eine Übergangsmetallverbindung Mangan, Cobalt und Nickel. Besonders bevorzugt enthält mindestens eine Übergangsmetallverbindung Mangan, Cobalt und Nickel in einem Verhältnis von (1-a-b):a:b, wobei $0 \leq a \leq 0,5$ und $0,1 \leq b \leq 0,8$ gilt. Beispielsweise enthält mindestens eine Übergangsmetallverbindung Mangan, Cobalt und Nickel in einem Verhältnis von (1-a-b):a:b, wobei $0,1 \leq a \leq 0,4$ und $0,2 \leq b \leq 0,6$ gilt.

Übergangsmetallverbindung kann gewählt sein aus Hydroxiden, Oxiden, Oxidhydroxiden und Carbonaten, bevorzugt aus Oxidhydroxiden, besonders bevorzugt aus Mischmetalloxidhydroxiden.

Die mindestens eine Übergangsmetallverbindung kann zusätzlich ein oder mehrere Dotierungselemente enthalten. Im Allgemeinen enthält Übergangsmetallverbindung höchstens vier Dotierungselemente. Zu den bevorzugten Dotierungselementen zählen Na, K, Ca, Zn, Mg, Al, Zr oder Ti. Bevorzugt enthält Übergangsmetallverbindung nicht mehr als zwei, besonders bevorzugt nicht mehr als eines dieser Dotierungselemente. Beispielsweise enthält Übergangsmetallverbindung Mg und/oder Al als Dotierungselement/e. Der gesamte molare Anteil aller Dotierungselemente in der mindestens einen Übergangsmetallverbindung beträgt in der Regel nicht mehr als 5%, bevorzugt nicht mehr als 2 %, besonders bevorzugt nicht mehr als 1% bezogen auf alle Metallatome in der Übergangsmetallverbindung. Sofern ein oder mehrere Dotierungselemente in Übergangsmetallverbindung enthalten sind, beträgt der Anteil im Allgemeinen mindestens 0,01 %, bevorzugt mindestens 0,1 %, besonders bevorzugt mindestens 0,5 % bezogen auf alle Metallatome in der mindestens einen Übergangsmetallverbindung.

Die mindestens eine Übergangsmetallverbindung kann im Allgemeinen auf verschiedene Art und Weise erhalten werden. Bevorzugt wird Übergangsmetallverbindung durch Kopräzipitation der Oxide, Oxidhydroxide oder Hydroxide der Elemente Mangan, Cobalt, Nickel und gegebenenfalls des oder der Dotierungselemente/s erhalten.

Die mindestens eine Übergangsmetallverbindung kann im Allgemeinen in unterschiedlichen Formen vorliegen. Bevorzugt liegt Übergangsmetallverbindung in Partikelform, besonders bevorzugt in einer im Wesentlichen kugelförmigen Partikelform vor. Makroskopisch liegt Übergangsmetallverbindung im Allgemeinen in Pulverform vor, beispielsweise als frei fließendes Pulver. Unter den frei fließenden Pulvern werden solche, die agglomeratfrei sind, besonders bevorzugt. Agglomeratfrei bedeutet auf der mikroskopischen Ebene, dass die Teilchen, die beispielsweise bei der Kopräzipitation entstehen, nicht zusammengebacken sind.

Die mindestens eine Übergangsmetallverbindung kann im Allgemeinen unterschiedliche Teilchengrößen aufweisen. Bevorzugt weist die Übergangsmetallverbindung einen D50-Wert von 2 bis 50 µm, besonders bevorzugt einen D50-Wert von 5 bis 20 µm auf. Der D50-Wert wird auch als mittlere Teilchengröße bezeichnet und ist definiert als der Medianwert der Teilchengröße, der bei 50 Volumenprozenten der Probe überschritten und bei den anderen 50 Volumenprozenten der Probe nicht erreicht wird.

Lithiumsalz (L) kann im Allgemeinen jedes mögliche Lithiumsalz sein.

In einer Ausführungsform ist Lithiumsalz (L) eines der gut wasserlöslichen Lithiumsalze, welche dem Fachmann bekannt sind. Bevorzugte gut wasserlösliche Lithiumsalze weisen eine Löslichkeit in Wasser bei 20°C und Atmosphärendruck von mehr als 30 g/L auf, so dass es möglich ist, hohe Konzentrationen von Lithium-Ionen in Lösung zu bringen, die insbesondere bei der Herstellung überstöchiometrischer Li-NMC-Oxide vorteilhaft sind. Besonders bevorzugte gut wasserlösliche Lithiumsalze sind Lithiumhydroxid oder Lithiumhydroxid-Hydrat.

In einer anderen Ausführungsform ist das Lithiumsalz (L) eines der schlecht wasserlöslichen Lithiumsalze, welche dem Fachmann bekannt sind. Bevorzugte schlecht wasserlösliche Lithiumsalze weisen eine Löslichkeit in Wasser bei 20°C und Atmosphärendruck von weniger als 20 g/L auf. Ein besonders bevorzugtes schlecht wasserlösliches Lithiumsalz ist Lithiumcarbonat. Das schlecht wasserlösliche Lithiumsalz kann im Allgemeinen unterschiedliche Teilchengrößen, d.h. unterschiedliche D50-Werte und D99-Werte, aufweisen. Bevorzugt weist das schlecht wasserlösliche Lithiumsalz einen D50-Wert von 1 bis 80 $\mu$m, besonders bevorzugt einen D50-Wert von 2 bis 20 $\mu$m auf. Bevorzugt weist das schlecht wasserlösliche Lithiumsalz einen D99-Wert von weniger als 200 $\mu$m, besonders bevorzugt einen D99-Wert von weniger als 60 $\mu$m auf. Der D99-Wert ist der Wert, der bei einem Volumenprozent der Probe überschritten und bei den anderen 99 Volumenprozenten der Probe nicht erreicht wird.

Das Gemisch (A) kann im Allgemeinen durch unterschiedliche Verfahren hergestellt werden. In der Ausführungsform, in der ein gut wasserlösliches Lithiumsalz als Lithiumsalz (L) verwendet wird, wird das Gemisch (A) bevorzugt erhalten durch ein Verfahren umfassend die Sprühtrocknung einer Suspension enthaltend Wasser, mindestens ein Lithiumsalz (L), und mindestens eine Übergangsmetallverbindung, wobei in der Suspension zumindest das Lithiumsalz (L) vollständig gelöst vorliegt.

Unabhängig davon, ob als Lithiumsalz (L) ein gut wasserlösliches oder schlecht wasserlösliches Lithiumsalz oder eine Mischung aus gut und schlecht wasserlöslichem Lithiumsalz verwendet wird, kann das Gemisch (A) durch Vermischen mindestens eines Lithiumsalzes (L) mit mindestens einer Übergangsmetallverbindung erhalten werden. Hierbei wird bevorzugt das Gemisch (A) durch Vermischen mindestens eines Lithiumsalzes (L) mit mindestens einer Übergangsmetallverbindung zu einem Ausgangsgemisch und durch anschließende Zugabe von Wasser zu dem so hergestellten Ausgangsgemisch erhalten. Dies wird besonders bevorzugt, wenn ein schlecht wasserlösliches Lithiumsalz als Lithiumsalz (L) verwendet oder mitverwendet wird. In diesem Zusammenhang hat die Zugabe von Wasser eine Stabilisierungswirkung auf das Ausgangsgemisch. Durch die Stabilisierung wird die Entmischungsneigung, beispielsweise bei Erschütterung, verringert. Je nach dem eingesetzten Lithiumsalz (L) können unterschiedliche Mengen an Wasser zugegeben werden. Üblicherweise beträgt die Menge des zugegebenen Wassers von 0,1% bis 4%, bevorzugt von 0,5% bis 2,5 %, besonders bevorzugt von 1,5% bis 2 %, bezogen auf das Gesamtgewicht des Gemisches (A).

Die thermische Behandlung des Gemisches (A) kann im Allgemeinen in einem Schritt oder in mehreren Teilschritten, die örtlich und zeitlich voneinander getrennt sein können, erfolgen. Bevorzugt erfolgt die thermische Behandlung des Gemisches (A) im Wesentlichen in einem Schritt.

Die thermische Behandlung des Gemisches (A) erfolgt erfindungsgemäß unter Durchmischung. Unter Durchmischung wird hier der mechanische Mischvorgang verstanden, bei dem die zu durchmischende Probe derart bewegt wird, so dass eine möglichst gleichmäßige Zusammensetzung (Homogenität) erreicht wird.

Die thermische Behandlung des Gemisches (A) erfolgt erfindungsgemäß unter fortwährender Durchmischung. Unter "fortwährend" wird verstanden, dass keine Phasen größerer Unterbrechungen auftreten.

Die fortwährende Durchmischung kann im Allgemeinen mittels unterschiedlicher Anzahl und Arten von Mischvorrichtungen erfolgen. Bevorzugt erfolgt die fortwährende Durchmischung in einem Drehrohrofen und/oder Drehkugelofen. Unter den Drehrohröfen sind solche bevorzugt, bei dem Hochtemperaturwerkstoffe auf Fe-Ni-Cr-Basis oder keramische Werkstoffe basierend auf $SiO_2$, MgO und/oder $Al_2O_3$ für die produktberührten Teile des Ofens verwendet werden. Beispielsweise wird ein Drehrohrofen verwendet, welcher mit Einrichtungen wie Hubschaufeln und Einbuchtungen am Drehkolben versehen sind, die im Wesentlichen parallel zur Drehachse angeordnet sind. Dadurch wird eine optimale Durchmischung des Gemisches gefördert, Reaktionen des Gemisches mit der Gasphase erleichtert und der Bildung von Agglomeraten entgegengewirkt.

Die fortwährende Durchmischung kann grundsätzlich mit oder ohne Materialtransport erfolgen. Bevorzugt erfolgt die fortwährende Durchmischung mit Materialtransport.

Die thermische Behandlung des Gemisches (A) erfolgt erfindungsgemäß in Gegenwart von Sauerstoff. Hierbei kann der Sauerstoff als reiner Sauerstoff, als Bestandteil der Luft oder als Bestandteil von sonstigen sauerstoffhaltigen Gasgemischen vorliegen. Unter einem sauerstoffhaltigen Gasstrom wird ein solcher Gasstrom verstanden, der mindestens 0.1 Volumenprozent, bevorzugt mindestens 1 Volumenprozent, besonders bevorzugt mindestens 5 Volumenprozent Sauerstoff enthält. Beispielsweise ist der sauerstoffhaltige Gasstrom ein Luftstrom. Im Allgemeinen kann der sauerstoffhaltige Gasstrom in unterschiedlichen Richtungen relativ zur vorwiegenden Materialflussrichtung eingeleitet werden. Unter der vorwiegenden Materialflussrichtung wird die Richtung verstanden, in der das Gemisch (A) bei der fortwährenden Durchmischung im Wesentlichen durch die Mischvorrichtung bewegt wird. Die thermische Behandlung des Gemisches (A) erfolgt bevorzugt derart, dass ein sauerstoffhaltiger Gasstrom im Wesentlichen in Richtung der Materialflussrichtung eingeleitet wird.

Im Allgemeinen liegt im Drehrohrofen eine Materialflussrichtung vor. Ein Drehkugelofen wird im Allgemeinen chargenweise betrieben, d.h. derart betrieben, dass das zu kalzinierende Material zunächst eingefüllt wird, der Drehkolben anschließend erhitzt sowie danach abgekühlt wird und schließlich das kalzinierte Material entnommen wird. Bevorzugt erfolgt die thermische Behandlung des Gemisches (A) in einem Drehrohrofen und/oder Drehkugelofen und derart, dass ein sauerstoffhaltiger Gasstrom im Wesentlichen in Richtung der vorwiegenden Materialflussrichtung eingeleitet wird. Besonders bevorzugt erfolgt diese thermische Behandlung in einem Drehrohrofen und derart, dass ein sauerstoffhaltiger Gasstrom im Wesentlichen in Richtung der vorwiegenden Materialflussrichtung eingeleitet wird.

Die thermische Behandlung des Gemisches (A) kann im Allgemeinen bei unterschiedlichen Volumenströmen des sauerstoffhaltigen Gasstroms, bezogen auf das Gewicht des Gemisches (A), erfolgen. Der Volumenstrom ist abhängig vom verwendeten Lithiumsalz (L). Ist das im Gemisch (A) enthaltene Lithiumsalz (L) ein gut wasserlösliches Lithiumsalz, so wird der sauerstoffhaltige Gasstrom bei der thermischen Behandlung des Gemisches (A) bevorzugt auf einen Volumenstrom von 10 bis 300 Liter Sauerstoff pro Stunde pro Kilogramm, besonders bevorzugt auf einen Volumenstrom von 30 bis 100 Liter Sauerstoff pro Stunde pro Kilogramm, bezogen auf das Gewicht des Gemisches (A), eingestellt. Ist das im Gemisch (A) enthaltene Lithiumsalz (L) ein schlecht wasserlösliches Lithiumsalz, so wird der sauerstoffhaltige Gasstrom bei der thermischen Behandlung des Gemisches (A) bevorzugt auf einen Volumenstrom von 6 bis 180 Liter Sauerstoff pro Stunde pro Kilogramm, besonders bevorzugt auf einen Volumenstrom von 30 bis 80 Liter Sauerstoff pro Stunde pro Kilogramm, bezogen auf das Gewicht des Gemisches (A), eingestellt.

Die thermische Behandlung des Gemisches (A) erfolgt erfindungsgemäß derart, dass das/die im Gemisch (A) enthaltene Lithiumsalz/e (L) nicht schmilzt/schmelzen. Ist Lithiumsalz (L) Lithiumhydroxid oder Lithiumhydroxid-Hydrat, so erfolgt diese thermische Behandlung bevorzugt bei Temperaturen von 250°C bis 400°C, besonders bevorzugt bei Temperaturen von 310°C bis 390°C, beispielsweise bei Temperaturen von 340°C bis 360°C. Ist Lithiumsalz (L )Lithiumcarbonat, so erfolgt diese thermische Behandlung bevorzugt bei Temperaturen von 300°C bis 710°C, besonders bevorzugt bei Temperaturen von 450°C bis 675°C, beispielsweise bei Temperaturen von 520°C bis 580°C.

Das Zwischenprodukt (B) ist erfindungsgemäß ein Gemisch, welches im Wesentlichen lithiumhaltige Mischmetallhydroxide und lithiumhaltige Mischmetalloxidhydroxide enthält, worin Mangan, Cobalt und Nickel im Verhältnis (1-a-b):a:b enthalten sind und die über alle Ionen von Mangan, Cobalt und Nickel gemittelte Oxidationszahl mindestens 4-1,75a-1,75b beträgt, wobei $0 \leq a \leq 0,5$ und $0,1 \leq b \leq 0,8$ gilt. Das Zwischenprodukt (B) kann Reste eines oder mehrerer Lithiumsalze (L) enthalten.

Lithium-Mischmetalloxide, die als Metallatome im Wesentlichen Lithium, Mangan, Cobalt und Nickel enthalten und ein stöchiometrisches Verhältnis von Lithium zur Gesamtheit der Übergangsmetalle größer 1 aufweisen, werden erfindungsgemäß durch thermische Behandlung des Zwischenproduktes (B) hergestellt.

Die thermische Behandlung des Zwischenproduktes (B) kann im Allgemeinen in einem Schritt oder in mehreren Teilschritten, die örtlich und zeitlich voneinander getrennt sein können, erfolgen. Bevorzugt erfolgt die thermische Behandlung des Zwischenproduktes (B) im Wesentlichen in einem Schritt.

Die thermische Behandlung des Zwischenproduktes (B) erfolgt erfindungsgemäß ohne Durchmischung.

Im Allgemeinen kann die thermische Behandlung des Zwischenproduktes (B) in Öfen unterschiedlicher Anzahl und Arten erfolgen. Bevorzugt erfolgt diese thermische Behandlung in einem Tunnelofen und/oder Kammerofen. Als möglicher Tunnelofen kann beispielsweise ein Rollenherdofen oder ein Durchschiebeofen eingesetzt werden.

Im Allgemeinen kann die thermische Behandlung des Zwischenproduktes (B) in der Gesamtmenge des Zwischenproduktes (B) erfolgen oder derart erfolgen, dass hierbei das Zwischenprodukt (B) in einzelne Teilmengen aufgeteilt vorliegt. Bevorzugt erfolgt diese thermische Behandlung derart, dass hierbei das Zwischenprodukt (B) in einzelne Teilmengen aufgeteilt und in einzelne Behälter gefüllt vorliegt. Die Behälter können im Allgemeinen Behälter unterschiedlicher Arten sein. Diese Behälter sind bevorzugt die im Wesentlichen aus oxidischer Keramik gefertigten Behälter, besonders bevorzugt aus Aluminiumoxid oder Alumosilikaten gefertigten Behälter.

Beispielsweise erfolgt die thermische Behandlung des Zwischenproduktes (B) derart, dass (B) in Teilmengen aufgeteilt und in einzelne Behälter, die im Wesentlichen aus oxidischer Keramik gefertigt sind, gefüllt vorliegt und in einem Tunnelofen und/oder Kammerofen behandelt wird. Auf diese Weise kann auch bei kontinuierlicher Arbeitsweise, d.h. wenn das Zwischenprodukt (B) mit einer bestimmten Schubgeschwindigkeit in den Tunnelofen und/oder Kammerofen hinein- und wieder herausgeführt wird, sichergestellt werden, dass die Verweilzeiten des im Ofen thermisch behandelten Materials im Wesentlichen gleich sind bzw. sich kaum voneinander unterscheiden.

Die thermische Behandlung des Zwischenproduktes (B) erfolgt erfindungsgemäß in Gegenwart von Sauerstoff. Hierbei kann der Sauerstoff als reiner Sauerstoff, als Bestandteil der Luft oder als Bestandteil von sonstigen sauerstoffhaltigen Gasgemischen vorliegen. Unter einem sauerstoffhaltigen Gasstrom wird ein solcher Gasstrom verstanden, der mindestens 0,1 Volumenprozent, bevorzugt mindestens 1 Volumenprozent, besonders bevorzugt mindestens 5 Volumenprozent Sauerstoff enthält. Beispielsweise ist der sauerstoffhaltige Gasstrom ein Luftstrom. Im Allgemeinen kann der sauerstoffhaltige Gasstrom in unterschiedlichen Richtungen relativ zur vorwiegenden Materialflussrichtung eingeleitet werden. Die thermische Behandlung des Zwischenproduktes (B) erfolgt bevorzugt derart, dass ein sauerstoffhaltiger Gasstrom im Wesentlichen senkrecht zur oder entgegen der vorwiegenden Materialflussrichtung eingeleitet wird.

Als Behälter sind beispielsweise Tiegel zu nennen, vorzugsweise Tiegel aus keramischem Material, insbesondere Tiegel aus hitzebeständigem keramischem Material.

Im Allgemeinen liegt im Tunnelofen eine Materialflussrichtung vor.

Ein Kammerofen wird im Allgemeinen stationär betrieben, d.h. beispielsweise derart, dass ein oder mehrere zu erhitzende Behälter zunächst in den Ofen eingebracht werden, der Ofen anschließend auf Temperatur gebracht wird und nach dem Abkühlen der oder die Behälter wieder entnommen wird bzw. werden. Bevorzugt erfolgt die thermische Behandlung des Zwischenproduktes (B) in einem Tunnelofen und/oder Kammerofen, und zwar derart, dass ein sauerstoffhaltiger Gasstrom im Wesentlichen senkrecht zur oder entgegen der vorwiegenden Materialflussrichtung eingeleitet wird. Besonders bevorzugt erfolgt diese thermische Behandlung in einem Tunnelofen und derart, dass ein sauerstoffhaltiger Gasstrom im Wesentlichen senkrecht zur oder entgegen der vorwiegenden Materialflussrichtung eingeleitet wird.

Die thermische Behandlung des Zwischenproduktes (B) kann im Allgemeinen kontinuierlich oder diskontinuierlich erfolgen. Erfolgt diese thermische Behandlung diskontinuierlich, so kann ein Gasaustausch im Ofen in gleichen oder unterschiedlichen Zeitabständen erfolgen. Wird Luft als Prozessgas verwendet, so wird dieser Gasaustausch im Ofen als Luftwechsel bezeichnet. Die Gaswechselrate errechnet sich im Allgemeinen aus dem im Ofen eingeschlossenen Volumen und dem zugeführten Gasstrom, bezogen auf Normalbedingungen (0°C, 1013 mbar). Wenn beispielsweise das im Ofen eingeschlossene Volumen 100 Liter groß wäre und der zugeführte Gasstrom sich auf 1000 l/h beliefe, so würde die Gaswechselrate zehn mal betragen. Die Messung erfolgt üblicherweise durch ein Rotameter (Gasflussmessgerät) in der Gaszuführung zum Ofen.

Die thermische Behandlung des Zwischenproduktes (B) kann im Allgemeinen bei unterschiedlichen Temperaturen erfolgen. Diese thermische Behandlung erfolgt bevorzugt bei Temperaturen von 500°C bis 1200°C, besonders bevorzugt bei Temperaturen von 725°C bis 975°C.

Die aus dem oben beschriebenen, erfindungsgemäßen Verfahren erhältliche Endprodukte sind Lithium-Mischmetalloxide, die als Metallionen im Wesentlichen Lithium, Mangan, Cobalt und Nickel enthalten und ein stöchiometrisches Verhältnis von Lithium zur Gesamtheit der Übergangsmetalle größer 1 aufweisen. Bevorzugt ist das Endprodukt eine Verbindung der allgemeinen Formel

$$Li_{1+x}(Mn_{1-a-b}Co_aNi_b)_{1-y}M_yO_{2+z}R_{z'},$$

worin

$$-0,05 \leq x \leq 0,75$$

$$0 \leq a \leq 0,5$$

$$0,1 \leq b \leq 0,8$$

$$0 \leq y \leq 0,05$$

$$-0,1 \, x < z < 0,1 \, x$$

$$0 \leq z' < 0,04$$

ist, wobei

M ein oder mehrere Metalle ausgewählt aus der Gruppe bestehend aus Na, K, Ca, Zn, Mg, Al, Zr, Ti ist,
R ein oder mehrere Elemente ausgewählt aus der Gruppe bestehend aus Fluor und Wasserstoff ist.

Besonders bevorzugt ist das Endprodukt eine Verbindung der oben angegebenen allgemeinen Formel, worin $0 \leq z' < 0,01$ ist.

Beispielsweise ist das Endprodukt eine Verbindung der oben angegebenen allgemeinen Formel, worin a = 0,2 und b = 0,5 ist.

In einer weiteren Ausführungsform ist das Endprodukt beispielsweise eine Verbindung der oben angegebenen allgemeinen Formel, worin a = 0,2 und b = 0,4 ist.

In einer weiteren Ausführungsform ist das Endprodukt beispielsweise eine Verbindung der oben angegebenen allgemeinen Formel, worin a = 0,333 und b = 0,333 ist.

In einer weiteren Ausführungsform ist das Endprodukt beispielsweise eine Verbindung der oben angegebenen allgemeinen Formel, worin a = 0,1 und b = 0,5 ist.

In einer weiteren Ausführungsform ist das Endprodukt beispielsweise eine Verbindung der oben angegebenen allgemeinen Formel, worin a = 0,1 und b = 0,45 ist.

Erfindungsgemäß erhaltene Endprodukte können als Kathodenmaterial für eine Lithiumionenbatterie verwendet werden.

Das erfindungsgemäße Herstellverfahren ist ein effizientes Verfahren zur Herstellung von überstöchiometrischen Li-NMC-Oxiden, welches bei kurzen Prozesszeiten und niedrigen Temperaturen durchgeführt werden kann. Die aus dem erfindungsgemäßen Herstellverfahren erhaltenen Li-NMC-Oxide weisen als Kathodenmaterial ein hohes Maß an Sicherheit und eine hohe spezifische Kapazität auf.

Wird das erfindungsgemäße Herstellverfahren durchgeführt, so hält sich die Korrosion produktberührter Ofenwerkstoffe in einem kaum nennenswerten Ausmaß, da insbesondere bei der thermischen Behandlung des Gemisches (A) verhältnismäßig niedrige Temperaturen verwendet werden. Zudem weist das aus dem Herstellverfahren erhaltene Endprodukt eine hohe Homogenität der Lithiumverteilung auf und zeigt keine Agglomeration der Partikel, so dass ein nachgeschalteter Zermahlungsschritt in der Regel nicht erforderlich ist. Ferner ist eine deutlich bessere Ofenausnutzung bei der thermischen Behandlung des Zwischenproduktes (B) möglich, da (B) üblicherweise eine höhere Stampfdichte verglichen mit anderen Zwischenprodukten, die die oben genannten Voraussetzungen von (B) nicht erfüllen, hat.

Neben dem oben beschriebenen Herstellverfahren wird auch ein Steuerungsverfahren offenbart, welches die zweistufige Herstellung von Lithium-Mischmetalloxiden, die als Metallionen im Wesentlichen die Ionen von Lithium, Mangan, Cobalt und Nickel enthalten und ein stöchiometrisches Verhältnis von Lithium zur Gesamtheit der Übergangsmetalle größer 1 aufweisen, steuert. Bei diesem Steuerungsverfahren ist der Steuerungsparameter (P) die über alle Ionen von Mangan, Cobalt und Nickel gemittelte Oxidationszahl des Gemisches, welches im Wesentlichen lithiumhaltige Mischmetallhydroxide und lithiumhaltige Mischmetalloxidhydroxide enthält sowie die Metalle Mangan, Cobalt und Nickel im Verhältnis (1-a-b):a:b enthält und aus einer thermischen Behandlung in Gegenwart von Sauerstoff unter fortwährender Durchmischung erhältlich ist. Erfindungsgemäß bestimmt die Überschreitung des (P)-Schwellenwertes von 4-1,75a-1,75b den Zeitpunkt, an dem der Wechsel zu einer thermischen Behandlung ohne Durchmischung erfolgt.

Dieses Steuerungsverfahren erlaubt es, die zweistufige Herstellung der oben genannten Lithium-Mischmetalloxide dahingehend steuern, dass sie bei niedrigen Temperaturen und kurzen Prozesszeiten ausgeführt werden und zugleich Lithium-Mischmetalloxide liefert, die als Kathodenmaterial gleichermaßen über ein hohes Maß an Sicherheit bei der Benutzung und eine hohe spezifische Kapazität verfügen.

Hat man mittels dieses Steuerungsverfahrens alle Prozessparameter der zweistufigen Herstellung der oben genannten Lithium-Mischmetalloxide eingestellt, so reicht es aus, anschließend diese zweistufige Herstellung derart auszuführen, dass der Steuerungsparameter (P) nur stichprobenartig kontrolliert wird, sofern alle Prozessparameter unverändert bleiben.

Beispiele

Die Bestimmung des D50-Wertes und des D99-Wertes erfolgte beispielsweise durch Laserbeugung (Malvern Mastersizer 2000, ISO 13320:2009), wobei die Teilchengröße durch die Malvern Software (Malvern Application Version 5.60) unter Annahme kugelförmiger Teilchen ausgewertet wird. Zur Bestimmungsmethode, siehe auch: Koichi Iinoya, Hiroaki Masuda, Kinnosuke Watanabe, "Powder and bulk solids handling processes: instrumentation and control", New York: Marcel Dekker, 1988, ISBN 0-8247-7971-1, Seiten 164 bis 173.

Die oben genannte Oxidationszahl kann durch die im Nachfolgenden beschriebene Iod-Thiosulfat-Methode bestimmt werden: Eine bestimmte Menge der Probensubstanz wurde in einen Destillierkolben gegeben und mit 20 Gew.-%-iger Salzsäure versetzt. Der Destillierkolben wird vorsichtig erwärmt, bis die Lösung zum Sieden kommt. Das Destillat und die entstehenden Chlordämpfe wurden in eine Vorlage mit 10 Gew.-%-iger Kaliumiodid-Lösung eingeleitet. Die Destillation wurde so lange fortgesetzt, bis die Salzsäure weitgehend verdampft war. Anschließend wurde das Destillat mit 1-molarer Schwefelsäure angesäuert und das ausgeschiedene Iod mit 0,1-molarer Natriumthiosulfat-Lösung zurücktitriert, wobei zur Endpunkterkennung Stärke zugesetzt wurde. Aus dem Verbrauch an Thiosulfatlösung ($n_{Thio}$ in mol/g Probe) und dem Metallgehalt der Probe (Summe Mangan + Cobalt + Nickel in mol/g; $n_{Metall}$) ergibt sich die gemittelte Oxidationszahl der Übergangsmetalle Mangan, Cobalt und Nickel in der Probe als $2 + n_{Thio}/n_{Metall}$.

Zur Bestimmung der elektrochemischen Daten der Materialien wurden 80 % Lithium-Mischmetalloxid, 10 % Ruß (Super P Li) und 10 % Polyvinylidenfluorid-Copolymer (Kynar Flex® 2801) unter Zusatz von N-Methylpyrrolidon (NMP) innig zu einer Paste vermischt. Daraus wurde durch Beschichtung einer 30 $\mu$m dicken Aluminiumfolie eine Elektrode hergestellt (Aktivmaterialbeladung 5 bis 7 mg/cm$^2$). Nach Trocknung bei 105°C wurden kreisförmige Elektroden (Durchmesser 20 mm) ausgestanzt und zu Testzellen verbaut. Als Elektrolyt wurde eine 1 mol/L Lösung von $LiPF_6$ in Ethylencarbonat/Dimethylcarbonat (1:1 bezogen auf Massenanteile) eingesetzt. Die Anode der Testzellen bestand aus einer Lithiumfolie, die durch einen Separator aus Glasfaserpapier von der Kathode getrennt war.

Zur Zyklisierung wurden die Testzellen mit einem Potentiostaten verbunden, wobei die Lade- /Entladeströme (C-Rate) auf eine Kapazität von 150 mAh/g berechnet waren, d.h. 1 C entspricht 150 mA/g Kathodenmaterial. Die Abschaltspannung für den Lade- bzw. Endladevorgang waren auf 4,3 V bzw. 3,0 V festgelegt.

Die Zellen wurden zunächst für 2 Zyklen bei 0,1 C (15 mA/g) formiert, dann wurde bei 0,2 C (30 mA/g; 5 Zyklen) die Kapazität bestimmt (Mittelwert der 5 Entladekapazitäten). Daraufhin wurde der Entladestrom über 5 Zyklen bis auf 6,5 C erhöht, wobei der Ladestrom bei 0,2 C gehalten wurde (Stufen: 0,4 C; 0,8 C; 1,6 C; 3,2 C; 6,5 C).

Die Entladekapazität bei 6,5 C dient als Maß für die Strombelastbarkeit.

Die Stampfdichten wurden mittels eines Stampfvolumeters (beispielsweise STAV II der Firma J. Engelsmann AG, Ludwigshafen) bestimmt, wobei das Probevolumen vor dem Stampfen 25 ml betrug und die Probe vor der Messung 2000 mal gestampft wurde.

Die über alle Ionen von Mangan, Cobalt und Nickel gemittelte Oxidationszahl wird im Nachfolgenden als "gemittelte Oxidationszahl" bezeichnet. Die gemittelte Oxidationszahl wurde nach der oben beschriebenen Iod-Thiosulfat-Methode bestimmt. Die D50-Werte, die D99-Werte, die Stampfdichten und die elektrochemischen Daten wurden nach den oben beschriebenen Methoden bestimmt.

Im Rahmen der vorliegenden Erfindung bezeichnen Angaben in % grundsätzlich Gewichtsprozent, wenn nicht anders angegeben.

Beispiel 1: Herstellung von $Li_{1+x}Ni_{0,33}Co_{0,33}Mn_{0,33}O_{2+x}$ (a = 0,33; b = 0,33), ausgehend von Lithiumhydroxid-Monohydrat als Lithiumsalz (L)

800,0 g sphärisches co-präzipitiertes Mischmetalloxyhydroxid (20,6 % Ni, 21,0 % Co, 19,4 % Mn, D50-Wert 10 $\mu$m) wurden in einer Lösung von 388,15 g Lithiumhydroxid Monohydrat (58.1 % LiOH) in 1830 mL entionisiertem Wasser suspendiert und eine Stunde lang bei 60°C unter Stickstoff gerührt. Die erhaltene Suspension wurde sprühgetrocknet, wobei Luft als Arbeitsgas verwendet wurde und die Eingangstemperatur etwa 305°C und die Ausgangstemperatur 108-110°C betrug. So wurden 902,8 g des Gemisches (A1) als Sprühpulver erhalten. Anschließend wurden 127,9 g des Gemisches (A1) in einer Laborausführung eines Drehrohrofens 30 Minuten lang bei 375°C kalziniert, wobei die Heiz- und Kühlrate 12 K/min betrug. Der Luftstrom wurde auf 313 L(Luft)/h·kg bzw. 66 L(Sauerstoff)/h·kg bezogen auf das Gemisch (A1) eingestellt. Somit wurden 93,4 g des Zwischenproduktes (B1) erhalten. Die gemittelte Oxidationszahl von (B1) wurde bestimmt und betrug 2,998, lag somit oberhalb des Wertes 4-1,75a-1,75b = 2,845. Im Anschluss daran wurden 60,0 g des Zwischenproduktes (B1) in einem $Al_2O_3$-Tiegel eine Stunde lang bei 675°C und sechs Stunden lang bei 900°C kalziniert, wobei die Heiz- und Kühlrate 3 K/min betrug. Die Schütthöhe im Tiegel betrug 2,5 cm. Es wurden 57,8 g des Endproduktes (C1) erhalten, welches die Zusammensetzung $Li_{1+x}Ni_{0,33}Co_{0,33}Mn_{0,33}O_{2+x}$ hatte. Angaben zur gemittelten Oxidationszahl, Stampfdichte, Zusammensetzung und die elektrochemischen Daten sind den nachfolgenden Tabellen 1 und 3 zu entnehmen.

Tabelle 1: Zusammensetzungen, gemittelte Oxidationszahlen und Stampfdichten für Beispiel 1

| Beispiel | Material | Li (g/ 100 g) | Ni (g/ 100 g) | Co (g/ 100 g) | Mn (g/ 100 g) | gemittelte Oxidationszahl | x | Stampfdichte (kg/l) |
|---|---|---|---|---|---|---|---|---|
| 1 | A1 | 6,4 | 15,9 | 16,2 | 15,0 | 2,665 | 1,13 | 0,942 |
| 1 | B1 | | 18,1 | 18,5 | 17,1 | 2,998 | n.b. | 1,35 |
| 1 | C1 | 7,9 | 19,4 | 19,8 | 18,3 | 3,077 | 1,14 | 2,56 |
| n.b.: nicht bestimmt | | | | | | | | |

Beispiel 2: Herstellung von $Li_{1+x}Ni_{0,33}Co_{0,33}Mn_{0,33}O_{2+x}$ (a = 0,33, b = 0,33), ausgehend von Lithiumcarbonat als Lithiumsalz (L)

2213,05 g sphärisches co-präzipitiertes Mischmetalloxyhydroxid (20,6 % Ni, 21,0 % Co, 19,4 % Mn, D50-Wert 10 $\mu$m) wurden mit 990,08 g Lithiumcarbonat (D50-Wert 5 $\mu$m, D99-Wert kleiner als 40 $\mu$m) vermischt und das erhaltene Gemenge durch Zugabe von 57,66 g Wasser stabilisiert. Daraus wurden 3259,0 g des Gemisches (A2) als stabilisiertes Rohmaterialgemisch erhalten. Anschließend wurden 136,0 g des Gemisches (A2) in einer Laborausführung eines Drehrohrofens 30 Minuten lang bei 550°C kalziniert. Der Luftstrom wurde auf 294 L(Luft)/h kg bzw. 62 L(Sauerstoff)/h kg, bezogen auf die Masse an eingesetztem Material, eingestellt. Somit wurden 99,7 g des Zwischenproduktes (B2) erhalten. Die gemittelte Oxidationszahl von (B2) wurde bestimmt und betrug 2,982, lag somit oberhalb des Wertes 4-1,75a-1,75b = 2,845. Im Anschluss daran wurden 87,8 g des Zwischenproduktes (B2) in einem $Al_2O_3$-Tiegel eine Stunde lang bei 675°C und sechs Stunden lang bei 900°C kalziniert, wobei die Heiz- und Kühlrate 3 K/min betrug und die Schütthöhe im Tiegel bei 2,5 cm lag. Es wurden 84,0 g des Endproduktes (C2) erhalten, welches die Zusammensetzung $Li_{1+x}Ni_{0,33}Co_{0,33}Mn_{0,33}O_{2+x}$ hatte. Angaben zur gemittelten Oxidationszahl, Stampfdichte, Zusammensetzung und die elektrochemischen Daten sind den nachfolgenden Tabellen 2 und 3 zu entnehmen.

Vergleichsbeispiel V3: Herstellung von $Li_{1+x}Ni_{0,33}Co_{0,33}Mn_{0,33}O_{2+x}$ (a = 0,33, b = 0,33), ausgehend von Lithiumcarbonat als Lithiumsalz (L)

Das Gemisch (A3) wurde in der gleichen Weise hergestellt wie das Gemisch (A2) in Beispiel 2. Anschließend wurden 136,0 g des Gemisches (A3) in einer Laborausführung eines Drehrohrofens 30 Minuten lang bei 350°C kalziniert. Der Luftstrom wurde auf 294 L(Luft)/h kg bzw. 62 L(Sauerstoff)/h·kg, bezogen auf die Masse an eingesetztem Material, eingestellt. Somit wurden 117,2 g des Zwischenproduktes (B3) erhalten. Die gemittelte Oxidationszahl von (B3) wurde bestimmt und betrug 2,777, lag somit unter dem Wert 4-1,75a-1,75b = 2,845. Im Anschluss daran wurden 59 g des Zwischenproduktes (B3) in einem $Al_2O_3$-Tiegel eine Stunde lang bei 675°C und sechs Stunden lang bei 900°C kalziniert, wobei die Heiz- und Kühlrate 3 K/min betrug und die Schütthöhe im Tiegel bei 2,5 cm lag. Es wurden 48.6 g des Endproduktes (C3) erhalten, welches die Zusammensetzung $Li_{1+x}Ni_{0,33}Co_{0,33}Mn_{0,33}O_{2+x}$ hatte. Angaben zur gemittelten Oxidationszahl, Stampfdichte, Zusammensetzung und die elektrochemischen Daten sind den nachfolgenden Tabellen 2 und 3 zu entnehmen.

Tabelle 2: Zusammensetzungen, gemittelte Oxidationszahlen und Stampfdichten für das Beispiel 2 und für das Vergleichsbeispiel V3

| Beispiel | Material | Li (g/ 100 g) | Ni (g/ 100 g) | Co (g/ 100 g) | Mn (g/ 100 g) | gemittelte Oxidationszahl | X | Stampfdichte (kg/l) |
|---|---|---|---|---|---|---|---|---|
| 2 | A2 | 5,7 | 14,3 | 14,6 | 13,5 | 2,4 | 1,11 | 1 |
| V3 | A3 | 5,7 | 14,3 | 14,6 | 13,5 | 2,4 | 1,11 | 1 |
| 2 | B2 | | 18,0 | 18,4 | 17,0 | 2,982 | n.b. | 1,80 |
| V3 | B3 | | 15,0 | 15,3 | 14,1 | 2,777 | n.b. | 1,23 |
| 2 | C2 | 7,7 | 19,1 | 19,5 | 18,0 | 3,1 | 1,13 | 2,68 |
| V3 | C3 | 7,7 | 19,0 | 19,4 | 17,9 | 3,1 | 1,13 | 2,66 |

Tabelle 3: Elektrochemische Daten zu den Kathodenmaterialen aus den Beispielen 1, 2 und V3

| Beispiel | Material | Kapazität (C/10) | Kapazität (C/5) | Kapazität (6,5 C) |
|---|---|---|---|---|
| 1 | C1 | 145,2 | 144,2 | 100,8 |
| 2 | C2 | 147,5 | 144,8 | 100,5 |
| V3 | C3 | 144,6 | 142,4 | 95,1 |

**Patentansprüche**

1.  Verfahren zur Herstellung von Lithium-Mischmetalloxiden, die als Metallatome im Wesentlichen Lithium, Mangan, Cobalt und Nickel enthalten und ein stöchiometrisches Verhältnis von Lithium zur Gesamtheit der Übergangsmetalle größer 1 aufweisen, umfassend

    a) die Herstellung eines als Zwischenprodukt (B) bezeichneten Gemisches, welches im Wesentlichen lithiumhaltige Mischmetallhydroxide und lithiumhaltige Mischmetalloxidhydroxide enthält,

    worin Mangan, Cobalt (Variable a) und Nickel (Variable b) im Verhältnis (1-a-b):a:b enthalten sind und worin die über alle Ionen von Mangan, Cobalt und Nickel gemittelte Oxidationszahl mindestens 4-1,75a-1,75b beträgt, wobei $0 \leq a \leq 0,5$ und $0,1 \leq b \leq 0,8$ gilt,
    durch eine, unter fortwährender Durchmischung und in Gegenwart von Sauerstoff erfolgende, thermische Behandlung eines Gemisches (A), enthaltend mindestens eine Übergangsmetallverbindung und mindestens ein Lithiumsalz (L),
    wobei während der thermischen Behandlung Lithiumsalz (L) nicht schmilzt, und

    b) die ohne Durchmischung und in Gegenwart von Sauerstoff erfolgende thermische Behandlung des Zwischenproduktes (B).

**2.** Verfahren nach Anspruch 1 , wobei die thermische Behandlung des Zwischenproduktes (B) in einem Tunnelofen und/oder Kammerofen erfolgt.

**3.** Verfahren nach einem der vorangehenden Ansprüche, wobei die thermische Behandlung des Zwischenproduktes (B) derart erfolgt, dass ein sauerstoffhaltiger Gasstrom im Wesentlichen senkrecht zur oder entgegen einer vorwiegenden Materialflussrichtung eingeleitet wird.

**4.** Verfahren nach einem der vorangehenden Ansprüche, wobei die thermische Behandlung des Gemisches (A) in einem Drehrohrofen und/oder Drehkugelofen erfolgt.

**5.** Verfahren nach einem der vorangehenden Ansprüche, wobei die thermische Behandlung des Gemisches (A) derart erfolgt, dass ein sauerstoffhaltiger Gasstrom im Wesentlichen in Richtung der vorwiegenden Materialflussrichtung eingeleitet wird

**6.** Verfahren nach einem der vorangehenden Ansprüche, wobei das Lithiumsalz (L) Lithiumhydroxid ist.

**7.** Verfahren nach einem der Ansprüche 1 bis 5, wobei das Lithiumsalz (L) Lithiumcarbonat ist.

**8.** Verfahren nach einem der Ansprüche 1 bis 7, wobei das Gemisch (A) erhalten wird, umfassend die Sprühtrockung einer Suspension enthaltend Wasser, mindestens ein Lithiumsalz (L), und mindestens eine Übergangsmetallverbindung, wobei in der Suspension zumindest das Lithiumsalz (L) vollständig gelöst vorliegt.

**9.** Verfahren nach einem der Ansprüche 1 bis 8, wobei das Gemisch (A) erhalten wird, umfassend das Vermischen mindestens eines Lithiumsalzes (L) mit mindestens einer Übergangsmetallverbindung zu einem Ausgangsgemisch und die anschließende Zugabe von Wasser zu dem so hergestellten Ausgangsgemisch.

**Claims**

**1.** Processes for the production of lithium mixed metal oxides, which essentially contain lithium, manganese, cobalt and nickel as metal atoms and have a stoichiometric ratio of lithium to the total transition metals greater than 1, comprising

a) the preparation of a mixture referred to as an intermediate product (B), which essentially contains lithium-bearing mixed metal hydroxides and lithium-bearing mixed metal oxide hydroxides, in which manganese, cobalt (variable a) and nickel (variable b) are contained in the ratio (1-a-b):a:b and in which the oxidation number averaged over all ions of manganese, cobalt and nickel is at least 4-1.75a-1.75b, where $0 \leq a \leq 0.5$ and $0.1 \leq b \leq 0.8$, by thermal treatment of a mixture (A) containing at least one transition metal compound and at least one lithium salt (L), under continuous mixing and in the presence of oxygen, wherein lithium salt (L) does not melt during thermal treatment, and

b) the thermal treatment of the intermediate product (B) without mixing and in the presence of oxygen.

**2.** The method of claim 1 wherein the thermal treatment of the intermediate product (B) is carried out in a tunnel kiln and/or chamber kiln.

**3.** A method according to any of the preceding claims, wherein the thermal treatment of the intermediate (B) is carried out in such a way that an oxygenated gas stream is introduced substantially perpendicular to or against a predominant material flow direction.

**4.** A method according to any of the preceding claims, wherein the thermal treatment of the mixture (A) is carried out in a rotary kiln and/or rotary ball kiln.

**5.** A method according to any of the preceding claims, wherein the thermal treatment of the mixture (A) is carried out in such a way that an oxygenated gas stream is introduced substantially in the direction of the predominant material flow direction

**6.** A method according to any of the preceding claims, wherein the lithium salt (L) is lithium hydroxide.

**7.** A method according to any one of claims 1 to 5, wherein the lithium salt (L) is lithium carbonate.

**8.** A method according to any one of claims 1 to 7, wherein the mixture (A) is obtained, comprising the spray drying of a suspension containing water, at least one lithium salt (L), and at least one transition metal compound, wherein at least the lithium salt (L) is completely dissolved in the suspension.

**9.** A method according to any one of claims 1 to 8, wherein the mixture (A) is obtained, comprising the mixing of at least one lithium salt (L) with at least one transition metal compound to a starting mixture and the subsequent addition of water to the starting mixture thus produced.

**Revendications**

**1.** Procédé de production d'oxydes métalliques mixtes de lithium, qui contiennent essentiellement du lithium, du manganèse, du cobalt et du nickel sous forme d'atomes métalliques et ont un rapport stoechiométrique du lithium aux métaux de transition totaux supérieur à 1, comprenant

a) la préparation d'un mélange appelé produit intermédiaire (B), qui contient essentiellement des hydroxydes métalliques mixtes contenant du lithium et des hydroxydes d'oxydes métalliques mixtes contenant du lithium, dans lequel le manganèse, le cobalt (variable A) et le nickel (variable B) sont contenus dans le rapport (1-A-B) :A :B et dans lequel l'indice d'oxydation moyen sur tous les ions de manganèse, de cobalt et de nickel est d'au moins 4-1,75a-1,75b, où $0 \leq a \leq 0,5$ et $0,1 \leq b \leq 0,8$, par traitement thermique d'un mélange (A) contenant au moins un composé de métal de transition et au moins un sel de lithium (L), en mélange continu et en présence d'oxygène,
dans lequel le sel de lithium (L) ne fond pas pendant le traitement thermique, et
b) le traitement thermique du produit intermédiaire (B) sans mélange et en présence d'oxygène.

**2.** Procédé selon la revendication 1, dans lequel le traitement thermique du produit intermédiaire (B) est effectué dans un four tunnel et/ou un four à chambre.

**3.** Procédé selon l'une quelconque des revendications précédentes, dans lequel le traitement thermique de l'intermédiaire (B) est effectué de telle manière qu'un flux de gaz oxygéné est introduit sensiblement perpendiculairement ou à l'encontre d'une direction d'écoulement de matériau prédominante.

**4.** Procédé selon l'une quelconque des revendications précédentes, dans lequel le traitement thermique du mélange (A) est effectué dans un four rotatif et/ou un four à boules rotatif.

**5.** Procédé selon l'une quelconque des revendications précédentes, dans lequel le traitement thermique du mélange (A) est effectué de telle sorte qu'un flux de gaz oxygéné est introduit sensiblement dans la direction de la direction prédominante de l'écoulement du matériau

**6.** Procédé selon l'une quelconque des revendications précédentes, dans lequel le sel de lithium (L) est de l'hydroxyde de lithium.

**7.** Procédé selon l'une quelconque des revendications 1 à 5, dans lequel le sel de lithium (L) est du carbonate de lithium.

**8.** Procédé selon l'une quelconque des revendications 1 à 7, dans lequel le mélange (A) est obtenu, comprenant le séchage par pulvérisation d'une suspension contenant de l'eau, au moins un sel de lithium (L) et au moins un composé de métal de transition, dans lequel au moins le sel de lithium (L) est complètement dissous dans la suspension.

**9.** Procédé selon l'une quelconque des revendications 1 à 8, dans lequel le mélange (A) est obtenu, comprenant le mélange d'au moins un sel de lithium (L) avec au moins un composé de métal de transition à un mélange de départ et l'ajout ultérieur d'eau au mélange de départ ainsi produit.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- US 20070202405 A1
- JP 2000173599 A
- JP 2003095659 A

### In der Beschreibung aufgeführte Nicht-Patentliteratur

- **KOICHI LINOYA ; HIROAKI MASUDA ; KINNOSU-KE WATANABE.** Powder and bulk solids handling processes: instrumentation and control. Marcel Dekker, 1988, 164-173